(19) **Europäisches Patentamt / European Patent Office / Office européen des brevets**

(11) **EP 4 293 053 A1**

(12) **EUROPEAN PATENT APPLICATION**
published in accordance with Art. 153(4) EPC

(43) Date of publication:
**20.12.2023 Bulletin 2023/51**

(21) Application number: **22752670.4**

(22) Date of filing: **03.02.2022**

(51) International Patent Classification (IPC):
**C08F 8/44** (2006.01)     **C08F 220/28** (2006.01)
**C08F 220/56** (2006.01)     **H01M 4/13** (2010.01)
**H01M 4/62** (2006.01)

(52) Cooperative Patent Classification (CPC):
**C08F 8/44; C08F 220/28; C08F 220/56;
H01M 4/13; H01M 4/62;** Y02E 60/10

(86) International application number:
**PCT/JP2022/004168**

(87) International publication number:
**WO 2022/172843 (18.08.2022 Gazette 2022/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.02.2021 JP 2021018890**

(71) Applicant: **DIC CORPORATION**
**Itabashi-ku**
**Tokyo 174-8520 (JP)**

(72) Inventors:
• **OE Nobuhiro**
  **Sakura-shi, Chiba 285-8668 (JP)**
• **KAJIKAWA Masahiro**
  **Takaishi-shi, Osaka 592-0001 (JP)**
• **MUKAI Takashi**
  **Takaishi-shi, Osaka 592-0001 (JP)**
• **FUKUCHI Iwao**
  **Sakura-shi, Chiba 285-8668 (JP)**

(74) Representative: **Gerauer, Marc Philippé**
**Kraus & Weisert**
**Patentanwälte PartGmbB**
**Thomas-Wimmer-Ring 15**
**80539 München (DE)**

(54) **NEGATIVE ELECTRODE BINDER COMPOSITION, NEGATIVE ELECTRODE, AND SECONDARY BATTERY**

(57)     Provided are a negative electrode binder composition which has excellent slurry stability without using a thickener, such as cellulose, in a negative electrode active material for an LIB secondary battery, and which is suppressed in the resistance to swelling by a solvent, and a negative electrode using the same and a secondary battery. A negative electrode binder composition comprising a copolymer having a hydroxyl group-containing monomer (a) and an acid group-containing monomer (b) as essential components, in which the copolymer has a weight average molecular weight of 700,000 or more, as measured using an aqueous GPC measurement apparatus, and in which a dried polymer film of the negative electrode binder composition has a swelling ratio of 0 to 10% by weight, as measured after immersed in a carbonate mixed solvent at 45°C for 72 hours.

EP 4 293 053 A1

**Description**

**TECHNICAL FIELD**

The present invention relates to a negative electrode binder composition, a negative electrode using the same and a secondary battery.

**BACKGROUND ART**

In the negative electrode for a lithium-ion secondary battery, as a binder, a sodium salt of carboxymethyl cellulose (CMC), which is a water-soluble polymer, and a styrene-butadiene copolymer (SBR), which is an aqueous latex resin, are generally used in combination. The binder has main functions such that, for example, in the process of producing an electrode, 1) the components including active materials and a conducting auxiliary are uniformly dispersed, 2) the rheology of the electrode mixture slurry is controlled, 3) when applying and drying the slurry, the mixture layer is leveled, and 4) the mixture components and the current collector are bound together. In connection with the battery performance, the binder further has functions such that, for example, 5) expansion of the electrode due to a volume change of the active material caused in the charge-discharge cycle is suppressed, that 6) binding between the active material and the current collector is maintained to surely achieve the electronic conduction properties, and that 7) the binder appropriately swells by the electrolytic solution to secure the ionic conduction properties.

The lithium-ion secondary battery has been widely used as a rechargeable power source for a laptop computer, a mobile phone, and the like, and, in recent years, the use of the battery in power tools, such as an electric tool, and middle size or large-size devices, such as an automobile and stationary storage battery facilities, is rapidly expanding. As the range to which the lithium-ion secondary battery is applied is quickly widening, a variety of performances are required for the battery in the wider range of temperatures, and three performances of the battery, i.e., capacity, output, and life are of significance, and an improvement of these performances is particularly desired.

Under the circumstances, various attempts are taken to satisfy the requirements of improvement of the battery performance. For example, with respect to the negative electrode material, as an attempt for increasing the capacity, a novel negative electrode active material is studied as a substitute for carbon active materials (for example, graphite) which have conventionally been widely used. As examples of novel negative electrode active materials, there can be mentioned a tm alloy, a silicon alloy, a silicon oxide and the like. These novel negative electrode active materials have a capacity several times as large as that of the carbon active materials, and even a small amount of the active material added can increase the negative electrode capacity.

However, the novel negative electrode active materials have a problem in that the capacity maintaining ratio in the charge-discharge cycle is inferior to that of the carbon active materials. One of the reasons for this resides in that the novel negative electrode active materials suffer large volume expansion and shrinkage during charging and discharging, as compared to the carbon active materials, and thus the active material layer in the electrode largely expands, so that the electrode structure is fractured, causing removal of the active material or deterioration of the electronic conduction properties.

Another reason is that when the SEI film formed on the surface of the active material cannot follow the volume change and is fractured, the surface of the active material, which is not covered with the SEI film, is exposed to cause a further SEI film forming reaction, so that decomposition of the electrolytic solution proceeds. The SEI film is a film which is formed on the surface of the active material at the time of the initial charging, and which is composed mainly of decomposition products of the electrolytic solution, and the binder resin in contact with the surface of the active material is believed to also contribute to the formation of the SEI film. It is considered that the SEI film has a role in mediating an insertion or elimination reaction of lithium ions, and simultaneously suppresses a further decomposition reaction of the electrolytic solution, and thus contributes to an improvement of the performance of the battery. When the SEI film is too thin, the decomposition reaction of the electrolytic solution cannot be terminated, and conversely, when the SEI film is too thick, the electric resistance is increased, adversely affecting the life or efficiency of the battery.

As an attempt for solving the above-mentioned problems caused due to a volume change of the novel negative electrode active material, for example, PTL 1 has proposed a method in which an aromatic polyimide having high strength is used as a binder to suppress expansion of the electrode layer due to a volume change of the negative electrode active material. Further, PTL 2 has proposed a method in which partially crosslinked polyacrylic acid is used as a binder to suppress a volume change of the negative electrode active material. Furthermore, PTL 3 has proposed a method in which a copolymer of acrylic acid and polyvinyl alcohol is used as a binder to suppress a volume change of the negative electrode active material. However, with the binder of PTL 1, the initial charge-discharge efficiency is such poor that a capacity of the active material cannot be satisfactorily exhibited. Further, the binders of PTLs 2 and 3 cannot achieve satisfactory cycle characteristics at high temperatures and at low temperatures.

CITATION LIST

PATENT LITERATURE

PTL 1: JP06648854B

PTL 2: JP06457043B

PTL 3: JP06888139B

SUMMARY OF INVENTION

TECHNICAL PROBLEM

As mentioned above, the conventional binder used in the negative electrode for a lithium-ion secondary battery has the unsatisfactory ability to suppress a lowering of the battery performance caused due to volume expansion of the novel active material or the like. Accordingly, an object of the present invention is to provide a negative electrode and a secondary battery which can obtain excellent battery performance even when using the novel active material.

SOLUTION TO PROBLEM

The present inventors have conducted extensive and intensive studies with a view toward solving the above-mentioned problems. As a result, it has been found that, by using a polymer binder which has a hydroxyl group and an acid group, and which has a molecular weight controlled to be higher than conventional polymers for binder, very excellent slurry stability can be achieved without using a thickener, such as cellulose, and further a film formed from the biner composition is suppressed in the resistance to swelling by a solvent. Further, it has been found that a negative electrode produced using the above-mentioned binder has high peel strength and low electrode expansion ratio caused when charged, and therefore excellent charge-discharge characteristics are exhibited in the evaluation of the battery even when the number of charge-discharge cycles is increased, and the present invention has been completed.
Specifically, the present invention is directed to the followings.

[1] A negative electrode binder composition comprising a copolymer having a hydroxyl group-containing monomer (a) and an acid groap-containing monomer (b) as essential components, in which the copolymer has a weight average molecular weight of 700,000 or more, as measured using an aqueous GPC measurement apparatus, and in which a dried polymer film of the negative electrode binder composition has a swelling ratio of 0 to 10% by weight, as measured after immersed in a carbonate mixed solvent (EC (ethylene carbonate)/DEC (diethylene carbonate) = 50/50 (wt)) at 45°C for 72 hours.
[2] The negative electrode binder composition according to [1], in which the hydroxyl groups containing monomer (a) is at least one member selected from the group consisting of 2-hydroxyethyl acrylate, 2-hydroxypropyl acrylate, 3-hydroxypropyl acrylate, 2-hydroxybutyl acrylate, 4-hydroxybutyl acrylate, 2-hydroxyethyl methacrylate, 2-hydroxypropyl methacrylate, 3-hydroxypropyl methacrylate, 2-hydroxybutyl methacrylate, and 4-hydroxybutyl methacrylate.
[3] The negative electrode binder composition according to [1] or [2], in which the acid group-containing monomer (b) is at least one member selected from the group consisting of acrylic acid, methacrylic acid, maleic acid, monomethylmaleic acid, 2-carboxyethyl acrylate, 2-carboxyethyl methacrylate, maleic acid, and itaconic acid.
[4] The negative electrode binder composition according to any one of [1] to [3], in which the acid group-containing monomer (b) is neutralized by a basic composition or a light metal salt.
[5] The negative electrode binder composition according to any one of [1] to [4], in which the amount of the contained hydroxyl group-containing monomer (a) is 10 to 80% by weight, and the amount of the contained acid group-containing monomer (b) is 10 to 80% by weight
[6] The negative electrode binder composition according to any one of [1] to [5], which contains, as an additional monomer (c), at least one member selected from the group consisting of acrylamide, methacrylamide, N-methylacrylamide, N,N-dimethylacrylamide, and N-hydroxymethylacrylamide.
[7] A negative electrode comprising, as a component, the negative electrode binder composition according to [6], in which the amount of the contained additional monomer (c) is 0 to 80%.
[8] A negative electrode comprising the negative electrode binder composition according to any one of [1] to [7] as a component

[9] A secondary battery comprising the negative electrode according to [8] above.

ADVANTAGEOUS EFFECTS OF INVENTION

The negative electrode binder composition of the invention has excellent slurry stability without using a thickener, such as cellulose, and a negative electrode produced using the binder composition is suppressed in electrode expansion during the charging. Therefore, the negative electrode produced using the negative electrode binder composition of the invention has high peel strength, and thus excellent charge-discharge characteristics are exhibited in the evaluation of the battery even when the number of charge-discharge cycles is increased, so that the performance required by the recent LIB negative electrode can be achieved.

DESCRIPTION OF EMBODIMENTS

<Negative electrode binder composition>

The negative electrode binder composition of the present invention is a negative electrode binder composition comprising a copolymer having a hydroxyl group-containing monomer (a) and an acid group-containing monomer (b) as essential components, in which the copolymer has a weight average molecular weight of 700,000 or more, as measured using an aqueous GPC measurement apparatus, and in which a dried polymer film of the negative electrode binder composition has a swelling ratio of 0 to 10% by weight, as measured after immersed in a carbonate mixed solvent at 45°C for 72 hours.
The copolymer has a weight average molecular weight of 700,000 or more, preferably 750,000 to 1,500,000, more preferably 800,000 to 1,200,000, as measured using an aqueous GPC measurement apparatus. When the weight average molecular weight of the copolymer is 700,000 or more, as mentioned above in ADVANTAGEOUS EFFECTS OF INVENTION, the negative electrode binder composition has excellent slurry stability, and a negative electrode produced using the binder composition is suppressed in electrode expansion during the charging.
In the aqueous GPC measurement apparatus, a polymer filling material, such as polyhydroxymethacrylate which is a general filling material for column, can be used. As a column, for example, SB 806 HQ, or SB-806M HQ of Shodex OHpak series, manufactured by Showa Denko K. K., can be used. Further, as an eluent, a neutral salt solution, such as an aqueous solution of sodium nitrate, an aqueous solution of sodium hydrogenhydrochloride, an aqueous solution of sodium sulfate, or a phosphate buffer, can be used. The concentration of the eluent is preferably, for example, about 0.1 to 0.3 mol/L. As a GPC measurement apparatus, Shimadzu/L20 system or the like can be used. In the GPC measurement, as a standard material, polystyrene or pullulan can be used. Specifically, as a standard material. STANDARD P-82 (Pullulan), manufactured by Showa Denko K. K., or the like can be used.
As mentioned above, a dried polymer film of the negative electrode binder composition has a swelling ratio of 0 to 10% by weight, as measured after immersed in a carbonate mixed solvent at 45°C for 72 hours, and the swelling ratio is preferably 0.1 to 6% by weight, more preferably 0.1 to 4% by weight. The swelling ratio is preferably lower, and, when the swelling ratio is in the above range, a negative electrode produced using the binder composition has high peel strength, and therefore excellent charge-discharge characteristics can be exhibited in the evaluation of the battery even when the number of charge-discharge cycles is increased.
The swelling ratio can be determined by drying the negative electrode binder composition, for example, at ordinary room temperature for 72 hours and at 150°C for 30 minutes to form a dried polymer film (dried film) having a thickness of 150 $\mu$, and immersing the dried polymer film in a carbonate mixed solvent (for example, EC (ethylene carbonate)/DEC (diethylene carbonate) - 50/50 (wt. r)) at 60°C for 72 hours, and measuring a weight of the film obtained after immersed and determining a change ratio between the weights of the film before and after immersed. The high swelling ratio means that the negative electrode binder composition is likely to contain a solvent or to be plasticized, and a negative electrode produced using the binder composition is easily reduced in the bond strength
Examples of the hydroxyl group-containing monomer (a) in the copolymer include hydroxyethyl acrylate, hydroxypropyl acrylate, hydroxybutyl acrylate, and 2,3-dihydroxypropyl acrylate. Of these, the hydroxyl group-containing monomer (a) is preferably hydroxyethyl acrylate (especially 2-hydroxyethyl acrylate). The amount of the contained hydroxyl group-containing monomer (a) is, for example, 20 to 80% by weight, preferably 30 to 70% by weight, based on the total weight of the monomers constituting the copolymer. When the amount of the contained hydroxyl group-containing monomer (a) is in the above range, it is likely that both the slurry stability and the resistance of a film formed from the composition to swelling by an electrolyte at high temperatures are excellent
Examples of the acid group-containing monomer (b) in the copolymer include acrylic acid, methacrylic acid, 2-carboxyethyl acrylate, maleic acid, and itaconic acid. With respect to the acid group in the acid group-containing monomer (b), a carboxylic acid is preferred. Especially preferred is acrylic acid as the acid group containing monomer (b). The amount of the contained acid group-containing monomer (b) is, for example, 10 to 60% by weight, preferably 20 to 50% by weight, based on the total weight of the monomers constituting the copolymer. When the amount of the contained acid group-containing monomer (b) is in the above range, it is likely that both the slurry stability and the resistance of a film formed from the composition to swelling by an electrolyte at high temperatures are excellent

With respect to the monomer constituting the copolymer, a monomer other than the hydroxyl group-containing monomer (a) and acid group-containing monomer (b) (hereinafter, referred to as an "additional monomer (c)") may be contained. Examples of the additional monomers (c) include acrylamide, methacrylamide, N-methylacrylamide, N,N-dimethylacrylamidc, and N-hydroxymethylacrylamide. With respect to the additional monomer (c), especially preferred is acrylamide, and, when the copolymer contains acrylamide, an effect such that a film formed from the resultant composition is improved in toughness can be obtained. When the additional monomer (c) is contained, the amount of the contained additional monomer (c) is, for example, 5 to 40% by weight, preferably 5 to 20% by weight When the amount of the contained additional monomer (c) is in the above range, it is likely that the resistance to swelling by an electrolyte at high temperatures is excellent.

The copolymer in the negative electrode binder composition of the invention has constituent units derived from monomers including the above-mentioned hydroxyl group-containing monomer (a), acid group-containing monomer (b), and additional monomer (c) optionally added. The copolymer is obtained by, as mentioned below, appropriately charging the hydroxyl group-containing monomer (a), acid group containing monomer (b), and additional monomer (c) optionally added, and subjecting the resultant mixture to copolymerization by a conventionally known and common method.

The negative electrode binder composition of the invention contains, in addition to the copolymer, components required for constituting the negative electrode, such as an SiO negative electrode material, graphite, acetylene black, and a solvent. In the negative electrode binder composition of the invention, the types of the SiO negative electrode material and graphite and the like are not limited and those of any type can be used. The content of the copolymer in the negative electrode binder composition (nonvolatile content) is, for example, 3 to 50% by weight, preferably 3 to 40% by weight

The SiO negative electrode material is a material composed mainly of SiO (silicon monoxide) which exhibits charge-discharge characteristics in the negative electrode. In addition to the SiO negative electrode material, silicon particles, carbon, or the like, which similarly exhibits charge-discharge characteristics, may be contained in the composition. Further, as the SiO negative electrode material, silicon oxycarbide (SiOC) may be contained in the composition These components may be used individually or in combination. The content of the SiO negative electrode material in the negative electrode binder composition is, for example, 3 to 40% by weight, preferably 5 to 30% by weight

The graphite may be either natural graphite or artificial graphite which has been artificially synthesized, and examples of graphite include carbon materials, such as natural graphite, artificial graphite, hard carbon, and soft carbon. Graphite is also a component which exhibits charge-discharge characteristics like the SiO negative electrode material and the like. The content of the graphite in the negative electrode binder composition is, for example, 3 to 40% by weight, preferably 5 to 30% by weight

The acetylene black functions as a conducting auxiliary in the negative electrode, and a component other than the acetylene black, such as carbon black or ketjen black, may be used. The content of the component which functions as a conducting auxiliary in the negative electrode binder composition is, for example, 0.5 to 10% by weight, preferably 0.5 to 5% by weight.

With respect to the solvent, there is no particular limitation as long as the components required for constituting the negative electrode can be dispersed, but an aqueous solvent can be used, and ion-exchanged water is preferred. The content of the solvent in the negative electrode binder composition is, for example, 50 to 95% by weight, preferably 60 to 90% by weight. Further, the content of the nonvolatile component, except the solvent, in the negative electrode binder composition of the invention is, for example, 5 to 30% by weight, preferably 10 to 20% by weight

The negative electrode binder composition of the invention may contain, as a binder component, a component other than those mentioned above, which has conventionally been used, in such an amount that the effects of the invention are not sacrificed. Examples of such binder components include polymer compounds, such as a styrene butadiene rubber copolymer (SBR); (a)an (meth)acrylic copolymer composing an ethylenically unsaturated carboxylate (e.g., methyl (meth)acrylate, ethyl (meth)acrylate, butyl (meth)acrylate, (meth)acrylonitrile, hydroxyethyl (meth)acrylate or the like) and an ethylenically unsaturated carboxylic acid (e.g., acrylic acid, methacrylic acid, itaconic acid, fumaric acid, or maleic acid); polyvinylidene fluoride, polyethylene oxide, polyepichlorohydrin, polyphosphazene, polyacrylonitrile, polyimide, polyamide-imide, and carboxymethyl cellulose (CMC).

The negative electrode binder composition of the invention may contain an organic solvent, such as N-methyl-2-pyrrolidone (NMP), for dissolving the above-mentioned polymer compound. In addition to the components mentioned above, the negative electrode binder composition of the invention may contain a component required as a component of the negative electrode.

An example of the method for producing the negative electrode binder composition of the invention is described below.

A copolymer which is an essential component of the negative electrode binder composition is first synthesized.

The copolymer is obtained by charging a solvent, such as water, into a reaction vessel and heating the solvent to 50 to 80°C, and then adding a mixture of the hydroxyl group-containing monomer (a), acid group-containing monomer (b), additional monomer (c) as an optional component, and a polymerization initiator, such as ammonium persulfate, to cause a polymerization reaction to proceed. The polymerization reaction may be conducted in an atmosphere of inert gas, such as nitrogen gas. The polymerization reaction can be conducted at a temperature of 50 to 80°C for 1 to 10 hours. After completion of the reaction, the reaction mixture is cooled and adjusted in pH.

Then, to the obtained copolymer are added components required for constituting the negative electrode, such as an SiO negative electrode material, graphite, acetylene black, and a solvent, and the resultant mixture is dispersed in an aqueous solvent, such as ion-exchanged water. In dispersing, a dispersing apparatus, such as a stirrer, a ball mill, a super sand mill, or a pressure kneader, may be used. Alternatively, the composition may be prepared by kneading using a kneading machine. The negative electrode binder composition can be produced through the above-mentioned dispersing or kneading.

<Negative electrode>

The negative electrode of the invention comprises the above-described negative electrode binder composition as a component. The negative electrode of the invention is obtained by applying a slurry which is the negative electrode binder composition obtained as mentioned above onto a current collector copper foil to form a negative electrode layer in the form of a thin film. Alternatively, as mentioned below, the negative electrode may be obtained by forming a slurry which is the negative electrode binder composition into a sheet, pellets, or the like, and unifying the formed composition with a current collector.

With respect to the material for and the form of the current collector, there is no particular limitation, and, for example, copper, nickel, titanium, or stainless steel in a strip form, such as the form of a foil, a perforated foil, or a mesh, may be used. Further, a porous material, such as a porous metal (expanded metal) or carbon paper, can be used.

With respect to the method for applying the negative electrode material slurry to a current collector, there is no particular limitation, but examples include known methods, such as a metal mask printing method, an electrostatic coating method, a dip coating method, a spray coating method, a roll coating method, a doctor blade method, a gravure coating method, and a screen printing method. After the application, if necessary, a calendaring treatment using a plate press, a calender roll, or the like is preferably conducted.

Further, unifying the negative electrode material slurry formed into a sheet, pellets, or the like with a current collector can be made by a known method, such as rolling, pressing, or a combination thereof After unified, the electrode density is, for example, 1.0 to 1.8 $g/cm^3$, preferably 1.1 to 1.7 $g/cm^3$.

The negative electrode layer formed on the current collector or the negative electrode layer unified with the current collector is preferably subjected to heat treatment Conditions for the heat treatment are, for example, those at 80 to 150°C for 5 to 20 hours. The heat treatment removes the solvent and cures the binder to increase the strength, so that the adhesion between the particles and between the particles and the current collector can be improved. In order to prevent the current collector from being oxidized during the treatment, the heat treatment is preferably conducted in an inert atmosphere of helium, argon, nitrogen, or the like or an atmosphere of vacuum.

<Secondary battery>

The secondary battery of the invention comprises the above-mentioned negative electrode of the invention. When the secondary battery of the invention is used in, for example, a wet electrolyte secondary battery, the secondary battery can be constructed by disposing a positive electrode and the negative electrode of the invention so that they face through a separator, and pouring an electrolytic solution.

The positive electrode can be obtained, like the negative electrode, by forming a positive electrode layer on the surface of a current collector. In this case, with respect to the current collector, a metal or an alloy, such as aluminum, titanium, or stainless steel, which is in a strip form, such as the form of a foil, a perforated foil, or a mesh, can be used.

With respect to the positive electrode material used in the positive electrode layer, there is no particular limitation. When producing a secondary battery, especially a lithium-ion secondary battery, for example, a metal compound, a metal oxide, a metal sulfide, or an electrically conductive polymer material, which enables doping or intercalation of lithium ions, may be used, and there is no particular limitation. Examples include lithium cobalt oxide ($LiCoO_2$), lithium nickel oxide ($LiNiO_2$), lithium manganate ($LiMnO_2$), and a composite oxide thereof ($LiCoxNiyMnzO_2$, wherein $x + y + z = 1$), lithium manganese spinel ($LiMn_2O_4$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivine $LiMPO_4$ (M: Co, Ni, Mn, or Fe), conductive polymers, such as polyacetylene, polyaniline, polypyrrole, polythiophene, and polyacene, and porous carbon, and these can be used individually or in combination.

With respect to the separator, for example, nonwoven fabric, cloth, or a microporous film, each being mainly composed of a polyolefin, such as polyethylene or polypropylene, or a combination thereof can be used. When the nonaqueous electrolyte secondary battery to be produced has a structure in which the positive electrode and the negative electrode are not directly in contact with each other, it is not necessary to use a separator.

With respect to the electrolytic solution, for example, there can be used a so-called organic electrolytic solution used by dissolving a lithium salt, such as $LiClO_4$, $LiPF_6$, $LiAsF_6$, $LiBF_4$, or $LiSO_3CF_3$, in a nonaqueous solvent which is a single solvent or a mixture of two or more components selected from ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, $\gamma$-butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyltetrahydrofuran, 1,3-dioxolane, methyl acetate, ethyl acetate and the like.

With respect to the structure of the secondary battery of the invention, there is no particular limitation, but the secondary battery generally has a structure in which a positive electrode, a negative electrode, and a separator optionally provided are spirally wound into a flattened spiral form to form a spirally wound electrode group, or are together in the form of a plate and laminated to form a laminated electrode group, and the electrode group is sealed in an external packaging material.

With respect to the secondary battery of the invention, there is no particular limitation, but the secondary battery is used as a paper type battery, a button type battery, a coin type battery, a laminated type battery, a cylinder type battery, a square type battery, or the like. The above-described negative electrode active material in the invention can be applied to the whole types of electrochemical apparatuses having a charge-discharge mechanism in which insertion and elimination of lithium ions are made, for example, a hybrid capacitor, a solid lithium secondary battery, and the like.

EXAMPLES

Hereinbelow, the present invention will be described in more detail with reference to the following Examples. A copolymer was synthesized by the method in Synthesis Examples 1 to 7 below, and, using the obtained copolymer, a negative electrode was prepared by the method in Examples 1 to 3 and Comparative Examples 1 to 4. Using the obtained negative electrode and a positive electrode which was separately prepared, a secondary battery was produced by the method in Examples 4 to 6 and Comparative Examples 5 to 10.

[Aqueous GPC measurement]

In the aqueous GPC measurement, Shimadzu/L20 system was used as an HPLC apparatus, and Shodex OHpak SB-806MEQ (8.0 mm I. D. x 300 mmL. x 2) was used as columns. A 0.2 molIL aqueous solution of sodium nitrate was used as an eluent, and a sample was dissolved in the eluent at 0.5%, and the resultant solution was subjected to filtration using a ø 0.45 filter, followed by measurement 50 $\mu$L of the sample solution was charged and allowed to flow at a flow rate of 0.70 mL/min, whereupon a weight average molecular weight was determined using an RI detector. Using STANDARD P-82 (Pullulan), manufactured by Showa Denko K. K., as a standard material, a calibration curve was prepared.

[Synthesis of a copolymer]

[Synthesis Example 1]

500.0 parts by weight of ion-exchanged water was charged into a 1.0 L reaction vessel equipped with a stirrer, a thermometer, a condenser, and a nitrogen gas blower, and subjected to $N_2$ blowing for three hours, and then heated to 75°C. A mixture of 40.0 parts by weight of acrylic acid, 60.0 parts by weight of 2-hydroxyethyl acrylate, 0.367 parts by weight of ammonium persulfate (1,500 ppm based on the total mole of the monomers), and 50.0 parts by weight of ion-exchanged water was dropwise added to the ion-exchanged water in the reaction vessel over three hours, performing a polymerization reaction After completion of the addition, the resultant reaction mixture was maintained at the same temperature for two hours, followed by cooling. A5 mol/L aqueous solution of sodium hydroxide and distilled water were added to the mixture at a temperature of 40°C or lower so as to control the pH to be in the range of 6.8 to 12 and the nonvolatile content to be in the range of 14.8 to 15.2% by weight. The obtained copolymer had a nonvolatile content of 14.8% by weight, a pH of 6.8, a viscosity of 3,080 mPa-s, and a weight average molecular weight of 850,000, as measured by aqueous GPC.

(Measurement of the degree of swelling by a carbonate mixed solvent at 45°C)

The obtained copolymer solution was applied onto a PET film, and then allowed to stand and dried at room temperature for three days, forming a copolymer film. The formed film was removed and then cut into a 1.0 cm x 1.0 cm square, and then dried by an air convection dryer at 80°C for one hour, and further dried by a vacuum dryer at 110°C for 10 hours. The obtained film had a thickness of 100 to 150 $\mu$m. A weight of the film was measured, and then immersed in a carbonate mixed solvent (EC (ethylene carbonate)/DEC (diethylene carbonate) - 50/50 (wt)) at 45°C for 72 hours, and then a weight of the resultant film was further measured. The degree of swelling by the carbonate mixed solvent, which was calculated by the following Formula (1), was 3.7%.

Degree of swelling by the carbonate mixed solvent (%)

= (Weight of the film after immersed - Weight of the film before immersed)/(Weight of the film before immersed) x 100 (Formula 1)

[Synthesis Example 2]

A polymerization reaction was conducted in substantially the same manner as in Synthesis Example 1 except that, instead of the 60.0 parts by weight of 2-hydroxyethyl acrylate, 60.0 parts by weight of 4-hydroxybutyl acrylate was used, and 0.332 parts by weight of ammonium persulfate (1,500 ppm based on the total mole of the monomers) was used. The obtained copolymer had a nonvolatile content of 15.1% by weight, a pH of 6.9, a viscosity of 3,000 mPa-s, and a weight average molecular weight of 800,000, as measured by aqueous GPC. Further, the degree of swelling by the carbonate mixed solvent was 4.3%.

[Synthesis Example 3]

A polymerization reaction was conducted in substantially the same manner as in Synthesis Example 1 except that, instead of the 40.0 parts by weight of acrylic acid, 40.0 parts by weight of 2-carboxyethyl acrylate was used, and 0.272 parts by weight of ammonium persulfate (1,500 ppm based on the total mole of the monomers) was used. The obtained copolymer had a nonvolatile content of 14.9% by weight, a pH of 6.9, a viscosity of 3,000 mPa-s, and a weight average molecular weight of 840,000, as measured by aqueous GPC. Further, the degree of swelling by the carbonate mixed solvent was 3.9%.

[Synthesis Example 4]

500.0 parts by weight of ion-exchanged water was charged into a 1.0 L reaction vessel equipped with a stirrer, a thermometer, a condenser, and a nitrogen gas blower, and subjected to $N_2$ blowing for three hours, and then heated to 75°C. A mixture of 30.0 parts by weight of acrylic acid, 60.0 parts by weight of 2-hydroxyethyl acrylate, 10.0 parts by weight of acrylamide, 0.443 parts by weight of ammonium persulfate (1,500 ppm based on the total mole of the monomers), and 50.0 parts by weight of ion-exchanged water was dropwise added to the ion-exchanged water in the reaction vessel over three hours, performing a polymerization reaction. After completion of the addition, the resultant reaction mixture was maintained at the same temperature for two hours, followed by cooling. A 5 mol/L aqueous solution of sodium hydroxide and distilled water were added to the mixture at a temperature of 40°C or lower so as to control the pH to be in the range of 6.8 to 7.2 and the nonvolatile content to be in the range of 14.8 to 15.2% by weight. The obtained copolymer had a nonvolatile content of 15.1% by weight, a pH of 7.1, a viscosity of 3,100 mPa•s, and a weight average molecular weight of 730,000, as measured by aqueous GPC. Further, the degree of swelling by the carbonate mixed solvent was 2.9%.

[Synthesis Example 5]

A polymerization reaction was conducted in substantially the same manner as in Synthesis Example 4 except that 20.0 parts by weight of acrylic acid, 20.0 parts by weight of 2-hydroxyethyl acrylate, 60.0 parts by weight of acrylamide, and 0.405 parts by weight of ammonium persulfate (1,500 ppm based on the total mole of the monomers) were used, and, instead of the 5 mol/L aqueous solution of sodium hydroxide, 25% aqueous ammonia was used. The obtained copolymer had a nonvolatile content of 15.0% by weight, a pH of 7.0, a viscosity of 12,500 mPa-s, and a weight average molecular weight of 780,000, as measured by aqueous GPC. Further, the degree of swelling by the carbonate mixed solvent was 3.2%.

[Synthesis Example 6]

A polymerization reaction was conducted in substantially the same manner as in Synthesis Example 5 except that, instead of the 5 mol/L aqueous solution of sodium hydroxide, a 5 mol/L aqueous solution of lithium hydroxide was used. The obtained copolymer had a nonvolatile content of 15.0% by weight, a pH of 7.0, a viscosity of 13,700 mPa•s, and a weight average molecular weight of 780,000, as measured by aqueous GPC. Further, the degree of swelling by the carbonate mixed solvent was 3.7%.

[Synthesis Example 7]

A polymerization reaction was conducted in substantially the same manner as in Synthesis Example 5 except that, instead of the 25% aqueous ammonia, a 5 mol/L aqueous solution of sodium hydroxide was used. The obtained copolymer had a nonvolatile content of 15.0% by weight, a pH of 7.0, a viscosity of 13,200 mPa-s, and a weight average molecular weight of 780,000, as measured by aqueous GPC. Further, the degree of swelling by the carbonate mixed solvent was 3.7%.

[Synthesis Example 8]

A polymerization reaction was conducted in substantially the same manner as in Synthesis Example 4 except that 20.0 parts by weight of acrylic acid and 20.0 parts by weight of 2-hydroxyethyl acrylate were used, and hydroxymethylacrylamide was used instead of the acrylamide, 0.357 parts by weight of ammonium persulfate (1,500 ppm based on the total mole of the monomers) was used, and, instead of the 5 mol/L aqueous solution of sodium hydroxide, 25% aqueous ammonia was used. The obtained copolymer had a nonvolatile content of 15.0% by weight, a pH of 7.0, a viscosity of 17,100 mPa•s, and a weight average molecular weight of 830,000, as measured by aqueous GPC. Further, the degree of swelling by the carbonate mixed solvent was 3.2%.

[Synthesis Example 9]

A polymerization reaction was conducted in substantially the same manner as in Synthesis Example 4 except that 10.0 parts by weight of acrylic acid, 10.0 parts by weight of 2-hydroxyethyl acrylate, 80.0 parts by weight of acrylamide, and 0.438 parts by weight of ammonium persulfate (1,500 ppm based on the total mole of the monomers) were used, and, instead of the 5 mol/L aqueous solution of sodium hydroxide, 25% aqueous ammonia was used. The obtained copolymer had a nonvolatile content of 14.9% by weight, a pH of 7.0, a viscosity of 15,200 mPa•s, and a weight average molecular weight of 860,000, as measured by aqueous GPC. Further, the degree of swelling by the carbonate mixed solvent was 4.3%.

[Synthesis Example 10]

A polymerization reaction was conducted in substantially the same manner as in Synthesis Example 4 except that 35.0 parts by weight of acrylic acid, 35.0 parts by weight of 2-hydroxyethyl acrylate, 30.0 parts by weight of acrylamide, and 0.414 parts by weight of ammonium persulfate (1,500 ppm based on the total mole of the monomers) were used, and, instead of the 5 mol/L aqueous solution of sodium hydroxide, 25% aqueous ammonia was used. The obtained copolymer had a nonvolatile content of 15.0% by weight, a pH of 7.0, a viscosity of 13,300 mPa•s, and a weight average molecular weight of 840,000, as measured by aqueous GPC. Further, the degree of swelling by the carbonate mixed solvent was 4.2%.

[Synthesis Example 11]

A polymerization reaction was conducted in substantially the same manner as in Synthesis Example 4 except that 20.0 parts by weight of acrylic acid, 40.0 parts by weight of 2-hydroxyethyl acrylate, 40.0 parts by weight of acrylamide, and 0.442 parts by weight of ammonium persulfate (1,500 ppm based on the total mole of the monomers) were used, and, instead of the 5 mol/L aqueous solution of sodium hydroxide, 25% aqueous ammonia was used. The obtained copolymer had a nonvolatile content of 15.1% by weight, a pH of 7.0, a viscosity of 14,500 mPa•s, and a weight average molecular weight of 830,000, as measured by aqueous GPC. Further, the degree of swelling by the carbonate mixed solvent was 5.8%.

[Synthesis Example 12]

A polymerization reaction was conducted in substantially the same manner as in Synthesis Example 4 except that 30.0 parts by weight of acrylic acid, 20.0 parts by weight of 2-hydroxyethyl acrylate, 50.0 parts by weight of acrylamide, and 0.424 parts by weight of ammonium persulfate (1,500 ppm based on the total mole of the monomers) were used, and, instead of the 5 mol/L aqueous solution of sodium hydroxide, 25% aqueous ammonia was used. The obtained copolymer had a nonvolatile content of 15.1% by weight, a pH of 7.0, a viscosity of 13,000 mPa-s, and a weight average molecular weight of 840,000, as measured by aqueous GPC. Further, the degree of swelling by the carbonate mixed solvent was 3.7%.

[Synthesis Example 13]

A polymerization reaction was conducted in substantially the same manner as in Synthesis Example 1 except that the $N_2$ blowing for three hours was not conducted. The obtained copolymer had a nonvolatile content of 15.0% by weight, a pH of 6.8, a viscosity of 1,380 mPa•s, and a weight average molecular weight of 480,000, as measured by aqueous GPC. Further, the degree of swelling by the carbonate mixed solvent was 6.9%.

[Synthesis Example 14]

A polymerization reaction was conducted in substantially the same manner as in Synthesis Example 1 except that 20.0 parts by weight of acrylic acid, 80.0 parts by weight of 2-hydroxyethyl acrylate, and 0.340 parts by weight of ammonium persulfate (1,500 ppm based on the total mole of the monomers) were used. The obtained copolymer had a nonvolatile content of 14.9% by weight, a pH of 7.0, a viscosity of 2,800 mPa-s, and a weight average molecular weight of 750,000, as measured by aqueous GPC. Further, the degree of swelling by the carbonate mixed solvent was 18.8%.

[Synthesis Example 15]

500.0 parts by weight of ion-exchanged water was charged into a 1.0 L reaction vessel equipped with a stirrer, a thermometer, a condenser, and a nitrogen gas blower, and subjected to $N_2$ blowing for three hours, and then heated to 75°C. A mixture of 70.0 parts by weight of 2-hydroxyethyl acrylate, 30.0 parts by weight of acrylamide, 0.351 parts by weight of ammonium persulfate (1,500 ppm based on the total mole of the monomers), and 50.0 parts by weight of ion-exchanged water was dropwise added to the ion-exchanged water in the reaction vessel over three hours, performing a polymerization reaction. After completion of the addition, the resultant reaction mixture was maintained at the same temperature for 2 hours, followed by cooling. The obtained copolymer had a nonvolatile content of 15.0% by weight, a pH of 7.0, a viscosity of 4,300 mPa•s, and a weight average molecular weight of 750,000, as measured by aqueous GPC. Further, the degree of swelling by the carbonate mixed solvent was 12.3%.

[Synthesis Example 16]

500.0 parts by weight of ion-exchanged water was charged into a 1.0 L reaction vessel equipped with a stirrer, a thermometer, a condenser, and a nitrogen gas blower, and subjected to $N_2$ blowing for three hours, and then heated to 75°C. A mixture of 70.0 parts by weight of 2-hydroxyethyl acrylate, 30.0 parts by weight of acrylamide, 0.351 parts by weight of ammonium persulfate (1,500 ppm based on the total mole of the monomers), and 50.0 parts by weight of ion-exchanged water was dropwise added to the ion-exchanged water in the reaction vessel over three hours, performing a polymerization reaction. After completion of the addition, the resultant reaction mixture was maintained at the same temperature for two hours, followed by cooling. A 5 mol/L aqueous solution of sodium hydroxide and distilled water were added to the mixture at a temperature of 40°C or lower so as to control the pH to be in the range of 6.8 to 7.2 and the nonvolatile content to be in the range of 14.8 to 15.2% by weight The obtained copolymer had a nonvolatile content of 15.0% by weight, a pH of 7.0, a viscosity of 8,900 mPa-s, and a weight average molecular weight of 820,000, as measured by aqueous GPC. Further, the degree of swelling by the carbonate mixed solvent was 3.5%.

With respect to Synthesis Examples 1 to 16 above, the formulation of monomers, $N_2$ blowing or no blowing, the type of neutralizing salt, nonvolatile content, pH, viscosity, the weight average molecular weight of the copolymer, and the degree of swelling by the carbonate mixed solvent at 45°C are shown in Table 1 below.

[Table 1]

| | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 | Synthesis Example 10 | Synthesis Example 11 | Synthesis Example 12 | Synthesis Example 13 | Synthesis Example 14 | Synthesis Example is | Synthesis Example 16 |
|---|---|---|---|---|---|---|---|---|---|---|---|---|---|---|---|---|
| 2-Hydroxyethyl acrylate (HEA) (a) | 60 | | 60 | 60 | 20 | 20 | 20 | 20 | 10 | 35 | 20 | 30 | 60 | 80 | 70 | 0 |
| 4-Hydroxybutyl acrylate (HBA) (a') | | 60 | | | | | | | | | | | | | | |
| Acrylic acid (AA) (b) | 40 | 40 | | 30 | 20 | 20 | 20 | 20 | 10 | 35 | 40 | 20 | 40 | 20 | 0 | 70 |
| 2-Carboxyethyl acrylate (CEA) (b') | | | 40 | | | | | | | | | | | | | |
| Acrylamide (AAM) (c) | | | | 10 | 60 | 60 | 60 | | 80 | 30 | 40 | 50 | 0 | 0 | 30 | 30 |
| Hydroxymethylacrylamide (HAAM) (c') | | | | | | | | 60 | | | | | | | | |
| Conducting N$_2$ Blowing (three hours) or not | Yes | Yes | Yes | Yes | Yes | Yes | Yes | Yes | Yes | Yes | Yes | Yes | No | Yes | Yes | Yes |
| Type of neutralizing salt | Na Salt | Na Salt | Na Salt | Na Salt | NH$_3$ Salt | Li Salt | Na Salt | NH$_3$ Salt | NH$_3$ Salt | NH$_3$ Salt | NH$_3$ Salt | NH$_3$ Salt | Na Salt | Na Salt | - | Na Salt |
| Nonvolatile content (%) | 14.8 | 15.1 | 14.9 | 15.1 | 15.0 | 15.0 | 15.0 | 15.0 | 14.9 | 15.0 | 15.1 | 15.1 | 15.0 | 14.9 | 15.0 | 15.0 |
| pH | 6.80 | 6.9 | 6.9 | 7.1 | 7.0 | 7.0 | 7.0 | 7.0 | 7.0 | 7.0 | 7.0 | 7.0 | 6.8 | 7.0 | 7.0 | 7.0 |
| Viscosity (mPa·s) | 3,080 | 3,000 | 2,900 | 3,100 | 12,500 | 13,700 | 13,200 | 17,100 | 15,200 | 13,300 | 14,500 | 13,000 | 1,380 | 2,800 | 4,300 | 8,900 |
| Weight average molecular weight | 850,000 | 800,000 | 840,000 | 730,000 | 780,000 | 780,000 | 780,000 | 830,000 | 860,000 | 840,000 | 830,000 | 840,000 | 480,000 | 750,000 | 750,000 | 820,000 |
| Degree of swelling by carbonate mixed solvent (%) | 3.7 | 4.3 | 3.9 | 2.9 | 3.2 | 3.7 | 3.7 | 3.2 | 4.3 | 4.2 | 4.1 | 3.7 | 6.9 | 18.8 | 12.3 | 3.5 |

[Preparation of a negative electrode]

[Example 1]

(Preparation of a negative electrode mixture slurry)

11.5 parts by weight of an SiO negative electrode material (initial charge capacity: 2,062 mAh/g; initial discharge capacity: 1,631 mAh/g), 84.5 parts by weight of artificial graphite (initial charge capacity: 371 mAh/g; initial discharge capacity: 346 mAh/g), and 1.0 part by weight of acetylene black were weighed, and stirred using a planetary mixer or rotation- revolution mixer (ARE-310, manufactured by Thinky Corporation) under conditions such that the number of rotations was 1,000 rpm and the number of revolutions was 2,000 rpm for 30 seconds. 27.0 parts by weight (2.16 parts by weight, in terms of the weight of solids) of an aqueous solution, which was obtained by diluting the polymer (nonvolatile content 14.8% by weight) shown in Synthesis Example 1 above with distilled water so as to control the nonvolatile content to 8.0%, and 19.0 parts by weight of distilled water were added, and the resultant mixture was mixed until the mixture thoroughly became in a paste state. Then, the mixture was stirred using a rotation-revolution mixer (ARE-310, manufactured by Thinky Corporation) under conditions such that the number of rotations was 1,000 rpm and the number of revolutions was 2,000 rpm for two minutes, and heat generation was caused due to stirring and therefore the mixture was cooled with ice water to room temperature. Further, the mixture was stirred under conditions such that the number of rotations was 1,000 rpm and the number of revolutions was 2,000 rpm for two minutes, and then cooled with ice water to room temperature. 10.5 Parts by weight (0.84 parts by weight, in terms of the weight of nonvolatile matter) of the aqueous solution of the binder composition shown in Synthesis Example 1 above, which was previously prepared so as to control the nonvolatile content to 8%, was added, and the resultant mixture was mixed until the whole of the mixture became uniform, and then stirred using a rotation-revolution mixer (ARE-310, manufactured by Thinky Corporation) under conditions such that the number of rotations was 1,000 rpm and the number of revolutions was 2,000 rpm for 2 minutes, and cooled with ice water to room temperature. 5 Parts by weight of distilled water was added, and the resultant mixture was mixed until the whole of the mixture became uniform. Then, for adjusting the viscosity of the slurry, a viscosity was measured using a Brookfield type viscometer, and distilled water was appropriately added to the slurry so that the viscosity was in the range of 2,000 to 4,000 Pa•s under the condition at 30 rpm. Finally, the resultant slurry was stirred using a rotation-revolution mixer (ARE-310, manufactured by Thinky Corporation) under conditions such that the number of rotations was 1,000 rpm and the number of revolutions was 2,000 rpm for 30 seconds, preparing a negative electrode mixture slurry using the negative electrode binder composition of the invention.

(Preparation of a negative electrode)

Subsequently, a gap of a bar coater was adjusted so that the negative electrode mixture coating weight (areal density) after dried became 8.8 mg/cm$^2$, and the negative electrode mixture slurry was applied using the bar coater onto a copper foil which is a current collector. Then, the applied slurry was dried by an air convection dryer set at 80°C for eight minutes. The dried electrode was cut into a strip having a width of 40 mm, and pressed using a roll press machine (Tabletop Roll Press SA-602, manufactured by Tester Sangyo Co., Ltd.) so that the mixture layer density became 1.55 g/cm$^3$ (thickness of the mixture layer 66.7 $\mu$m). The electrode was subjected to vacuum drying at 110°C for 10 hours, and then a mixture layer density was further measured, and, as a result, the mixture layer density was 1.50 g/cm$^3$ (thickness of the mixture layer 68.6 $\mu$m). The initial charge capacity per unit area of the electrode was 4.95 mAh/cm$^2$. Thus, the negative electrode in Example 1 (areal density: 8.8 gm/cm$^2$; mixture layer density: 1.5 g/cm$^3$; mixture layer thickness: 68.6 $\mu$m; initial charge capacity per unit area: 4.95 mAh/cm$^2$) was obtained.

(Measurement of a peel strength and examination of a resistance of the electrode to winding)

The above prepared negative electrode was allowed to stand for six hours in a thermo-hygrostat at a temperature of 25°C and at a relative humidity of 50%, and then cut into a strip form having a width of 25 mm and a length of 100 mm. Then, using an adhesive double coated tape (No5015, manufactured by Nitto Denko Corporation), the cut strip was bonded to a stainless steel sheet so that the active material surface became the bonded side, preparing a sample for peel strength test. The end of the copper foil was removed 10 mm, and a polyimide tape was bonded to the end and used as a portion to be fitted to a peel tester. The sample for peel strength test was set in a peel tester (Autograph AG-X Plus, manufactured by Shimadzu Corporation), and a 180-degree peel test was conducted. The peel strength was 34.5 N/m. Then, the peeled (fractured) state of the negative electrode film was observed. Further, the negative electrode film was wound round a ø5 mm core, and visually observed as to whether a crack was generated in the film. In this example, no crack was generated.

[Example 2]

Substantially the same procedure as in Example 1 was repeated except that the polymer shown in Synthesis Example 2 above was used in the binder mixture used for preparation of the slurry. In this example, the peel strength was 27.8 N/m. Further, no crack was generated.

[Example 3]

Substantially the same procedure as in Example 1 was repeated except that the polymer shown in Synthesis Example 3 above was used in the binder mixture used for preparation of the slurry. In this example, the peel strength was 28.9 N/m. Further, no crack was generated.

[Example 4]

Substantially the same procedure as in Example 1 was repeated except that the polymer shown in Synthesis Example 4 above was used in the binder mixture used for preparation of the slurry. In this example, the peel strength was 24.5 N/m. Further, no crack was generated.

[Example 5]

Substantially the same procedure as in Example 1 was repeated except that the polymer shown in Synthesis Example 5 above was used in the binder mixture used for preparation of the slurry. In this example, the peel strength was 30.7 N/m. Further, no crack was generated.

[Example 6]

Substantially the same procedure as in Example 1 was repeated except that the polymer shown in Synthesis Example 6 above was used in the binder mixture used for preparation of the slurry. In this example, the peel strength was 29.5 N/m. Further, no crack was generated.

[Example 7]

Substantially the same procedure as in Example 1 was repeated except that the polymer shown in Synthesis Example 7 above was used in the binder mixture used for preparation of the slurry. In this example, the peel strength was 34.6 N/m. Further, no crack was generated.

[Example 8]

Substantially the same procedure as in Example 1 was repeated except that the polymer shown in Synthesis Example 8 above was used in the binder mixture used for preparation of the slurry. In this example, the peel strength was 28.4 N/m. Further, no crack was generated.

[Example 9]

Substantially the same procedure as in Example 1 was repeated except that the polymer shown in Synthesis Example 9 above was used in the binder mixture used for preparation of the slurry. In this example, the peel strength was 29.1 N/m. Further, no crack was generated.

[Example 10]

Substantially the same procedure as in Example 1 was repeated except that the polymer shown in Synthesis Example 10 above was used in the binder mixture used for preparation of the slurry. In this example, the peel strength was 30.5 N/m. Further, no crack was generated.

[Example 11]

Substantially the same procedure as in Example 1 was repeated except that the polymer shown in Synthesis Example 11 above was used in the binder mixture used for preparation of the slurry. In this example, the peel strength was 28.6 N/m. Further, no crack was generated.

[Example 12]

Substantially the same procedure as in Example 1 was repeated except that the polymer shown in Synthesis Example 12 above was used in the binder mixture used for preparation of the slurry. In this example, the peel strength was 28.4 N/m. Further, no crack was generated.

[Comparative Example 1]

Substantially the same procedure as in Example 1 was repeated except that the polymer shown in Synthesis Example 13 above was used in the binder mixture used for preparation of the slurry. In this example, the peel strength was 17.4 N/m. Further, no crack was generated.

[Comparative Example 2]

Substantially the same procedure as in Example 1 was repeated except that the polymer shown in Synthesis Example 14 above was used in the binder mixture used for preparation of the slurry. In this example, the peel strength was 14.5 N/m. Further, no crack was generated.

[Comparative Example 3]

Substantially the same procedure as in Example 1 was repeated except that the polymer shown in Synthesis Example 15 above was used in the binder mixture used for preparation of the slurry. In this example, the peel strength was 15.2 N/m. Further, no crack was generated.

[Comparative Example 4]

Substantially the same procedure as in Example 1 was repeated except that the polymer shown in Synthesis Example 16 above was used in the binder mixture used for preparation of the slurry. In this example, the peel strength was 14.5 N/m. Further, no crack was generated.

[Comparative Example 5]

Substantially the same procedure as in Example 1 was repeated except that the sodium polyacrylate (manufactured by FUJIFILM Wako Pure Chemical Corporation; polymerization degree: 22,000 to 70,000) was used in the binder mixture used for preparation of the slurry. In this example, the peel strength was 8.1 N/m. Further, no crack was generated.

[Comparative Example 6]

(Preparation of a negative electrode mixture slurry)

11.5 parts by weight of an SiO negative electrode material (initial charge capacity: 2,062 mAh/g; initial discharge capacity: 1,631 mAh/g), 84.5 parts by weight of artificial graphite (initial charge capacity: 371 mAh/g; initial discharge capacity: 346 mAh/g), and 1.0 part by weight of acetylene black were weighed, and stirred using a planetary mixer or rotation-revolution mixer (ARE-310, manufactured by Thinky Corporation) under conditions such that the number of rotations was 1,000 rpm and the number of revolutions was 2,000 rpm for 30 seconds. 48.0 parts by weight (0.96 parts by weight, in terms of the weight of solids) of an aqueous solution, which was obtained by dissolving carboxymethyl cellulose Na salt (CMC, SUNROSE MAC350HC, manufactured by Nippon Paper Industries Co., Ltd.) in distilled water so as to control the nonvolatile content to 2.0%, was added, and the resultant mixture was mixed until the mixture thoroughly became in a paste state. Then, the mixture was stirred using a rotation-revolution mixer (ARE-310, manufactured by Thinky Corporation) under conditions such that the number of rotations was 1,000 rpm and the number of revolutions was 2,000 rpm for two minutes, and heat generation was caused due to stirring and therefore the mixture was cooled with ice water to room temperature. Further, the mixture was stirred under conditions such that the number of rotations was 1,000 rpm and the number of revolutions was 2,000 rpm for 2 minutes, and then cooled with ice water to room temperature. 27.0 parts by weight (0.54 parts by weight, in terms of the weight of nonvolatile matter) of the above-mentioned aqueous solution of CMC, which was previously prepared so as to control the nonvolatile content to 2%, was added, and the resultant mixture was mixed until the whole of the mixture became uniform, and then stirred using a rotation revolution mixer (ARE-310, manufactured by Thinky Corporation) under conditions such that the number of rotations was 1,000 rpm and the number of revolutions was 2,000 rpm for two minutes, and cooled with ice water to room temperature. 20 Parts by weight of distilled

water and 2.95 parts by weight of a styrene-butadiene copolymer (SBR) (DS407H, manufactured by DIC Corporation; nonvolatile content 50.8%) (1.5 parts by weight, in terms of the weight of nonvolatile matter) were added, and the resultant mixture was further stirred using a rotation-revolution mixer (ARE-310, manufactured by Thinky Corporation) under conditions such that the number of rotations was 1,000 rpm and the number of revolutions was 2,000 rpm for 30 seconds, preparing a negative electrode mixture slurry. The preparation of a negative electrode, the measurement of a peel strength, and the examination of a resistance of the electrode to winding were conducted in the same manner as in Example 1. In this example, the peel strength was 16.8 N/m. Further, no crack was generated.

The binder resins used in the negative electrodes prepared in Examples 1 to 12 and Comparative Examples 1 to 6 above, peel strength, and 5 ø flex cracking resistance are shown in Table 2 below.

[Table 2]

| Electrode | Example 1 | Example 2 | Example 3 | Example 4 | Example 5 | Example 6 | Example 7 | Example 8 | Example 9 |
|---|---|---|---|---|---|---|---|---|---|
| Binder resin | Synthesis Example 1 | Synthesis Example 2 | Synthesis Example 3 | Synthesis Example 4 | Synthesis Example 5 | Synthesis Example 6 | Synthesis Example 7 | Synthesis Example 8 | Synthesis Example 9 |
| Peel strength (N/m) of negative electrode | 34.5 | 27.8 | 28.9 | 24.5 | 30.7 | 29.5 | 34.6 | 28.4 | 29.1 |
| 5ø Flex cracking resistance of negative electrode | No crack | No crack | No crack | No crack | No crack | No crack | No crack | No crack | No crack |

| Electrode | Example 10 | Example 11 | Example 12 | Comparative Example 1 | Comparative Example 2 | Comparative Example 3 | Comparative Example 4 | Comparative Example 5 | Comparative Example 6 |
|---|---|---|---|---|---|---|---|---|---|
| Binder resin | Synthesis Example 10 | Synthesis Example 11 | Synthesis Example 12 | Synthesis Example 13 | Synthesis Example 14 | Synthesis Example 15 | Synthesis Example 16 | Sodium polyacrylate | CMC/SBR |
| Peel strength (N/m) of negative electrode | 30.5 | 28.6 | 28.4 | 17.4 | 14.5 | 15.2 | 14.5 | 8.1 | 16.8 |
| 5ø Flex cracking resistance of negative electrode | No crack | No crack | No crack | No crack | No crack | No crack | No crack | No crack | No crack |

As can be seen from Table 2 above, Examples had a peel strength higher than that in Comparative Examples.

[Preparation of a positive electrode]

(Preparation of a positive electrode slurry)

In a chamber having a humidity controlled to 30% or less, 94.0 parts by weight of a positive electrode material $LiMn_{0.6}Co_{0.2}Ni_{0.2}O_2$ (initial charge capacity: 191 mAh/g; initial discharge capacity: 171 mAh/g) and 3.0 parts by weight of acetylene black were weighed, and stirred using a planetary mixer or rotation-revolution mixer (ARE-310, manufactured by Thinky Corporation) under conditions such that the number of rotations was 1,000 rpm and the number of revolutions was 2,000 rpm for 30 seconds. 27.0 parts by weight (2.16 parts by weight, in terms of the weight of solids) of an anhydrous N-methylpyrrolidone solution of polyvinylidene fluoride having a nonvolatile content controlled to 8.0%, and 19.0 parts by weight of anhydrous N-methylpyrrolidone were added, and the resultant mixture was mixed until the mixture thoroughly became in a paste state. Then, the mixture was stirred using a rotation-revolution mixer (ARE-310, manufactured by Thinky Corporation) under conditions such that the number of rotations was 1,000 rpm and the number of revolutions was 2,000 rpm for two minutes, and heat generation was caused due to stirring and therefore the mixture was cooled with ice water to room temperature. Further, the mixture was stirred under conditions such that the number of rotations was 1,000 rpm and the number of revolutions was 2,000 rpm for two minutes, and then cooled with ice water to room temperature. 10.5 parts by weight (0.84 parts by weight, in terms of the weight of nonvolatile matter) of the anhydrous N-methylpyrrolidone solution of polyvinylidene fluoride, which was previously prepared so as to control the nonvolatile content to 8%, was added, and the resultant mixture was mixed until the whole of the mixture became uniform, and then stirred using a rotation-revolution mixer (ARE-310, manufactured by Thinky Corporation) under conditions such that the number of rotations was 1,000 rpm and the number of revolutions was 2,000 rpm for two minutes, and cooled with ice water to room temperature. Five parts by weight of anhydrous N-methylpyrrolidone was added, and the resultant mixture was mixed until the whole of the mixture became uniform. Then, for adjusting the viscosity of the slurry, a viscosity was measured using a Brookfield type viscometer, and anhydrous N-methylpyrrolidone was appropriately added to the slurry so that the viscosity was in the range of 2,000 to 4,000 Pa-s under the condition at 30 rpm. Finally, the resultant slurry was stirred using a rotation-revolution mixer (ARE-310, manufactured by Thinky Corporation) under conditions such that the number of rotations was 1,000 rpm and the number of revolutions was 2,000 rpm for 30 seconds, preparing a positive electrode mixture slurry.

(Preparation of a positive electrode)

A gap of a bar coater was first adjusted so that the mixture coating weight (areal density) after dried became 25.0 $mg/cm^2$, and the positive electrode mixture slurry was applied using the bar coater onto an aluminum foil which is a current collector. Then, the applied slurry was dried by an air convection dryer set at 80°C for 10 minutes. The dried electrode was cut into a strip having a width of 40 mm, and pressed using a roll press machine (Tabletop Roll Press SA-602, manufactured by Tester Sangyo Co., Ltd.) so that the mixture layer density became 3.4 $g/cm^3$ (thickness of the mixture layer: 73.3 $\mu m$), and then subjected to vacuum drying at 110°C for 10 hours. The initial charge capacity per unit area of the electrode was 4.49 $mAh/cm^2$. Thus, a positive electrode (areal density: 25.0 $gm/cm^2$; mixture layer density: 3.4 $g/cm^3$; mixture layer thickness: 73.3 $\mu m$; initial charge capacity per unit area: 4.49 $mAh/cm^2$) was obtained.

[Production of a secondary battery]

[Example 13]

First, using a Thomson blade, the negative electrode shown in Example 1 was **cut into** a 24 mm x 24 mm square with a Tab, and the positive electrode shown in the example for preparing a positive electrode was cut into a 22 mm x 22 mm square with a Tab. A nickel tab lead was welded to the Tab portion of the cut negative electrode, and an aluminum tab lead was welded to the Tab portion of the cut positive electrode. Then, a separator (polyethylene microporous membrane having a thickness of 25 $\mu$) was cut into a 28 mm x 3.8 cm rectangle using a Thomson blade. The positive electrode and the negative electrode were disposed through the separator, and packaged by a laminated film, and the Tab portions were fixed by hot pressing. Then, 300 pL of an electrolytic solution (1.0 M $LiPF_6$ ethylene carbonate/dimethyl carbonate/methylethyl carbonate - 30/30/40 mixed solution (volume ratio) + 1% vinyl carbonate + 5% fluoroefhylene carbonate) was added, and the package was completely sealed by vacuum lamination, producing a laminated secondary battery.

(Initial charge-discharge efficiency and cycle characteristics)

The above-produced secondary battery was set in a charge-discharge apparatus, and allowed to stand at 25°C for three hours, and then one cycle of charging and discharging operation at 0.1C was conducted. In this instance, the initial charge-discharge efficiency was 81.2%. Then, a cycle of charging and discharging operation at 0.2C was repeated 50 times. When the discharge capacity of the first cycle at 0.2C was taken as 100%, the discharge capacity maintaining ratio after the 50th cycle was 85.0%.

(Electrode swelling ratio)

After the initial charging and discharging, the secondary battery was maintained at 45°C, and a charging operation at 0.5C was conducted once, and then the secondary battery was dismounted in a dry room, and the negative electrode in the fully charged state was removed. The negative electrode was washed with dimethyl carbonate and subjected to natural drying, and then a thickness of the electrode was measured by means of a micrometer. An electrode swelling ratio was determined from the following (Formula 2), and, as a result, it was 32.0%.

Electrode swelling ratio (%)

= (Thickness of the electrode obtained from the dismounted battery - Thickness of the electrode used in

producing the battery)/(Thickness of the mixture layer used in producing the battery) x 100

(Formula 2)

[Example 14]

Substantially the same procedure as in Example 13 was repeated except that the negative electrode prepared in Example 2 above was used. In this example, the initial charge-discharge efficiency was 81.5%. Further, the discharge capacity maintaining ratio was 86.4%. Further, the electrode expansion ratio was 30.4%.

[Example 15]

Substantially the same procedure as in Example 13 was repeated except that the negative electrode prepared in Example 3 above was used. In this example, the initial charge-discharge efficiency was 81.4%. Further, the discharge capacity maintaining ratio was 84.9%. Further, the electrode expansion ratio was 30.2%.

[Example 16]

Substantially the same procedure as in Example 13 was repeated except that the negative electrode prepared in Example 4 above was used. In this example, the initial charge-discharge efficiency was 81.6%. Further, the discharge capacity maintaining ratio was 84.7%. Further, the electrode expansion ratio was 31.1%.

[Example 17]

Substantially the same procedure as in Example 13 was repeated except that the negative electrode prepared in Example 5 above was used. In this example, the initial charge-discharge efficiency was 81.6%. Further, the discharge capacity maintaining ratio was 85.3%. Further, the electrode expansion ratio was 30.7%.

[Example 18]

Substantially the same procedure as in Example 13 was repeated except that the negative electrode prepared in Example 6 above was used. In this example, the initial charge-discharge efficiency was 82.7%. Further, the discharge capacity maintaining ratio was 85.3%. Further, the electrode expansion ratio was 30.6%.

[Example 19]

Substantially the same procedure as in Example 13 was repeated except that the negative electrode prepared in Example 7 above was used. In this example, the initial charge-discharge efficiency was 81.7%. Further, the discharge capacity maintaining ratio was 85.4%. Further, the electrode expansion ratio was 30.2%.

[Example 20]

Substantially the same procedure as in Example 13 was repeated except that the negative electrode prepared in Example 8 above was used. In this example, the initial charge-discharge efficiency was 81.5%. Further, the discharge capacity maintaining ratio was 85.0%. Further, the electrode expansion ratio was 30.0%.

[Example 21]

Substantially the same procedure as in Example 13 was repeated except that the negative electrode prepared in Example 9 above was used. In this example, the initial charge-discharge efficiency was 81.4%. Further, the discharge capacity maintaining ratio was 84.7%. Further, the electrode expansion ratio was 30.6%.

[Example 22]

Substantially the same procedure as in Example 13 was repeated except that the negative electrode prepared in Example 10 above was used. In this example, the initial charge-discharge efficiency was 81.4%. Further, the discharge capacity maintaining ratio was 84.9%. Further, the electrode expansion ratio was 30.0%.

[Example 23]

Substantially the same procedure as in Example 13 was repeated except that the negative electrode prepared in Example 11 above was used. In this example, the initial charge-discharge efficiency was 81.5%. Further, the discharge capacity maintaining ratio was 84.7%. Further, the electrode expansion ratio was 29.8%.

[Example 24]

Substantially the same procedure as in Example 13 was repeated except that the negative electrode prepared in Example 12 above was used. In this example, the initial charge-discharge efficiency was 81.4%. Further, the discharge capacity maintaining ratio was 84.9%. Further, the electrode expansion ratio was 30.2%.

[Comparative Example 7]

Substantially the same procedure as in Example 13 was repeated except that the negative electrode prepared in Comparative Example 1 above was used. In this example, the initial charge-discharge efficiency was 81.4%. Further, the discharge capacity maintaining ratio was 80.4%. Further, the electrode expansion ratio was 35.2%.

[Comparative Example 8]

Substantially the same procedure as in Example 13 was repeated except that the negative electrode prepared in Comparative Example 2 above was used. In this example, the initial charge-discharge efficiency was 80.9%. Further, the discharge capacity maintaining ratio was 72.0%. Further, the electrode expansion ratio was 40.3%.

[Comparative Example 9]

Substantially the same procedure as in Example 13 was repeated except that the negative electrode prepared in Comparative Example 3 above was used. In this example, the initial charge-discharge efficiency was 81.3%. Further, the discharge capacity maintaining ratio was 74.0%. Further, the electrode expansion ratio was 45.9%.

[Comparative Example 10]

Substantially the same procedure as in Example 13 was repeated except that the negative electrode prepared in Comparative Example 4 above was used. In this example, the initial charge-discharge efficiency was 81.2%. Further, the discharge capacity maintaining ratio was 78.5%. Further, the electrode expansion ratio was 36.4%.

[Comparative Example 11]

Substantially the same procedure as in Example 13 was repeated except that the negative electrode prepared in Comparative Example 5 above was used. In this example, the initial charge-discharge efficiency was 80.9%. Further, the discharge capacity maintaining ratio was 76.0%. Further, the electrode expansion ratio was 36.8%.

[Comparative Example 12]

Substantially the same procedure as in Example 13 was repeated except that the negative electrode prepared in Comparative Example 6 above was used. In this example, the initial charge-discharge efficiency was 81.1%. Further, the discharge capacity maintaining ratio was 79.0% Further, the electrode expansion ratio was 39.3%.

With respect to the secondary batteries produced in Examples 13 to 24 and Comparative Examples 7 to 12 above, the initial charge-discharge efficiency (%), 100th cycle capacity maintaining ratio (%), and electrode swelling ratio (%) are shown in Table 3 below.

[Table 3]

| Battery | Example 13 | Example 14 | Example 15 | Example 16 | Example 17 | Example 18 | Example 19 | Example 20 |
|---|---|---|---|---|---|---|---|---|
| Electrode | Example 1 | Example 2 | Example 3 | Example 4 | Example 5 | Example 6 | Example 7 | Example 8 |
| Binder resin | Synthesis Example 1 | Synthesis Example 2 | Synthesis Example 3 | Synthesis Example 4 | Synthesis Example 5 | Synthesis Example 6 | Synthesis Example 7 | Synthesis Example 8 |
| Initial charge-discharge efficiency (ICE) (%) | 81.2 | 81.5 | 81.4 | 81.6 | 81.6 | 82.7 | 81.7 | 81.5 |
| Capacity maintaining ratio (@45°C, 0.5C, 0.5C, after 100 Cycle) (%) | 85.0 | 86.4 | 84.9 | 84.7 | 85.3 | 85.3 | 85.4 | 85.0 |
| Electrode expansion ratio (%) | 32.0 | 30.4 | 30.2 | 31.1 | 30.7 | 30.6 | 30.2 | 30.0 |

| Battery | Example 21 | Example 22 | Example 23 | Example 24 | Comparative Example 7 | Comparative Example 8 | Comparative Example 9 | Comparative Example 10 | Comparative Example 11 | Comparative Example 12 |
|---|---|---|---|---|---|---|---|---|---|---|
| Electrode | Example 9 | Example 10 | Example 11 | Example 12 | Comparative Example 1 | Comparative Example 2 | Comparative Example 3 | Comparative Example 4 | Comparative Example 5 | Comparative Example 6 |
| Binder resin | Synthesis Example 9 | Synthesis Example 10 | Synthesis Example 11 | Synthesis Example 12 | Synthesis Example 13 | Synthesis Example 14 | Synthesis Example 15 | Synthesis Example 16 | Sodium polyacrylate | CMC/SBR |
| Initial charge-discharge efficiency (ICE) (%) | 81.4 | 81.4 | 81.5 | 81.4 | 81.4 | 80.9 | 81.3 | 81.2 | 80.9 | 81.1 |

(continued)

| Battery | Example 21 | Example 22 | Example 23 | Example 24 | Comparative Example 7 | Comparative Example 8 | Comparative Example 9 | Comparative Example 10 | Comparative Example 11 | Comparative Example 12 |
|---|---|---|---|---|---|---|---|---|---|---|
| Electrode | Example 9 | Example 10 | Example 11 | Example 12 | Comparative Example 1 | Comparative Example 2 | Comparative Example 3 | Comparative Example 4 | Comparative Example 5 | Comparative Example 6 |
| Binder resin | Synthesis Example 9 | Synthesis Example 10 | Synthesis Example 11 | Synthesis Example 12 | Synthesis Example 13 | Synthesis Example 14 | Synthesis Example 15 | Synthesis Example 16 | Sodium polyacrylate | CMC/SBR |
| Capacity maintaining ratio (@45°C, 0.5C, 0.5C, after 100 Cycle) (%) | 84.7 | 84.9 | 84.7 | 84.9 | 80.4 | 72.0 | 74.0 | 78.5 | 76.0 | 79.0 |
| Electrode expansion ratio (%) | 30.6 | 30.0 | 29.8 | 30.2 | 35.2 | 40.3 | 45.9 | 36.4 | 36.8 | 39.3 |

As can be seen from Table 3 above, in Examples 13 to 24 in which the negative electrode binder composition of the invention (Examples 1 to 12) was used, both the 100th cycle capacity maintaining ratio (%) and the electrode swelling ratio (%) were excellent, as compared to those in Comparative Examples 7 to 12 in which the negative electrode binder composition of the invention was not used.

## Claims

1. A negative electrode binder composition comprising a copolymer having a hydroxyl group-containing monomer (a) and an acid group-containing monomer (b) as essential components, wherein the copolymer has a weight average molecular weight of 700,000 or more, as measured using an aqueous GPC measurement apparatus, and wherein a dried polymer film of the negative electrode binder composition has a swelling ratio of 0 to 10% by weight, as measured after immersed in a carbonate mixed solvent (EC (ethylene carbonate)/DEC (diethylene carbonate) - 50/50 (wt)) at 45°C for 72 hours.

2. The negative electrode binder composition according to claim 1, wherein the hydroxyl group-containing monomer (a) is at least one member selected from the group consisting of 2-hydroxyethyl acrylate, 2-hydroxypropyl acrylate, 3-hydroxypropyl acrylate, 2-hydroxybutyl acrylate, 4-hydroxybutyl acrylate, 2-hydroxyethyl methacrylate, 2-hydroxypropyl methacrylate, 3-hydroxypropyl methacrylate, 2-hydroxybutyl methacrylate, and 4-hydroxybutyl methacrylate.

3. The negative electrode binder composition according to claim 1 or 2, wherein the acid groups containing monomer (b) is at least one member selected from the group consisting of acrylic acid, methacrylic acid, maleic acid, monomethylmaleic acid, 2-catboxyethyl acrylate, 2-carboxyethyl methacrylate, maleic acid, and itaconic acid.

4. The negative electrode binder composition according to any one of claims 1 to 3, wherein the acid group-containing monomer (b) is neutralized by a basic composition or a light metal salt.

5. The negative electrode binder composition according to any one of claims 1 to 4, wherein the amount of the contained hydroxyl group-containing monomer (a) is 10 to 80% by weight, and the amount of the contained acid group-containing monomer (b) is 10 to 80% by weight

6. The negative electrode binder composition according to any one of claims 1 to 5, which further contains, as an additional monomer (c), at least one member selected from the group consisting of acrylamide, methacrylamide, N-methylacrylamide, N,N-dimethylacrylamide, and N-hydroxymethylacrylamide.

7. The negative electrode binder composition according to claim 6, wherein the amount of the contained additional monomer (c) is 0 to 80%.

8. A negative electrode comprising the negative electrode binder composition according to any one of claims 1 to 7 as a component.

9. A secondary battery comprising the negative electrode according to claim 8.

## INTERNATIONAL SEARCH REPORT

| International application No. |
|---|
| **PCT/JP2022/004168** |

**A.    CLASSIFICATION OF SUBJECT MATTER**

*C08F 8/44*(2006.01)i; *C08F 220/28*(2006.01)i; *C08F 220/56*(2006.01)i; *H01M 4/13*(2010.01)i; *H01M 4/62*(2006.01)i
FI:    H01M4/62 Z; H01M4/13; C08F220/28; C08F220/56; C08F8/44

According to International Patent Classification (IPC) or to both national classification and IPC

**B.    FIELDS SEARCHED**

Minimum documentation searched (classification system followed by classification symbols)

C08F8/44; C08F220/28; C08F220/56; H01M4/13; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | WO 2019/167730 A1 (ZEON CORP.) 06 September 2019 (2019-09-06)<br>example 6, table 1 | 1-9 |
| Y | WO 2018/030002 A1 (NEC ENERGY DEVICES, LTD.) 15 February 2018 (2018-02-15)<br>paragraph [0067], example 2, table 1 | 1-9 |
| Y | WO 2015/186363 A1 (ZEON CORP.) 10 December 2015 (2015-12-10)<br>examples 1-17, table 2 | 6-7 |
| Y | WO 2017/056467 A1 (ZEON CORP.) 06 April 2017 (2017-04-06)<br>example 1, table 1 | 6-7 |
| A | JP 2016-149313 A (ZEON CORP.) 18 August 2016 (2016-08-18)<br>entire text, all drawings | 1-9 |
| A | WO 2016/067633 A1 (ZEON CORP.) 06 May 2016 (2016-05-06)<br>entire text, all drawings | 1-9 |
| A | JP 2003-157851 A (HITACHI CHEM. CO., LTD.) 30 May 2003 (2003-05-30)<br>entire text, all drawings | 1-9 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 293 053 A1

**INTERNATIONAL SEARCH REPORT**
Information on patent family members

International application No.

**PCT/JP2022/004168**

| Patent document cited in search report | | | Publication date (day/month/year) | Patent family member(s) | | | Publication date (day/month/year) |
|---|---|---|---|---|---|---|---|
| WO | 2019/167730 | A1 | 06 September 2019 | US 2021/0057725 A1 example 6, table 1 EP 3761408 A1 | | | |
| WO | 2018/030002 | A1 | 15 February 2018 | US 2019/0273246 A1 paragraph [0060], example 2, table 1 EP 3477744 A1 | | | |
| WO | 2015/186363 | A1 | 10 December 2015 | US 2017/0062828 A1 examples 1-17, table 2 EP 3154113 A1 | | | |
| WO | 2017/056467 | A1 | 06 April 2017 | US 2018/0258202 A1 example 1, table 1 EP 3358660 A1 | | | |
| JP | 2016-149313 | A | 18 August 2016 | (Family: none) | | | |
| WO | 2016/067633 | A1 | 06 May 2016 | US 2017/0244095 A1 entire text, all drawings EP 3214676 A1 JP 2016-171074 A KR 10-2017-0078623 A | | | |
| JP | 2003-157851 | A | 30 May 2003 | WO 2003/018687 A2 entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 06648854 B
- JP 06457043 B
- JP 06888139 B